# EUROPEAN PATENT APPLICATION

(11) **EP 3 167 715 A1**
(43) Date of publication of application: **17.05.2017**
(21) Application number: 15818637.9
(22) Date of filing: 09.07.2015
(51) Int. Cl.: A01N 43/80, A01N 31/16, C04B 41/00

(54) **ADDITIVE FOR INHIBITING BIOLOGICAL GROWTH IN CONCRETE STRUCTURES AND USE THEREOF**

(30) Priority: 10.07.2014 ES 201431036
(71) Applicant: Universitat Politècnica De Catalunya, 08034 Barcelona (ES)
(72) Inventor: AGUADO DE CEA, Antonio, 08034 Barcelona (ES); SEGURA PÉREZ, Ignacio, 08034 Barcelona (ES); VAQUERO MARTÍNEZ, José María, 08034 Barcelona (ES); SERVOS ROS, Francesc, 08034 Barcelona (ES)
(74) Representative: Juncosa Miro, Jaime
(86) International application number: PCT/ES2015/070534
(87) International publication number: WO 2016/005641

(57) **Abstract**

**BIOFOULING-INHIBITING ADDITIVE IN CONCRETE STRUCTURES,** consisting in a solution composed of two antimicrobial agents -one of them being bactericidal and fungicidal, the other being algaecidal and fungicidal-, one deaerating agent and one vehicular medium. The first antimicrobial agent belongs to the polychlorophenoxyphenol family, and it makes up between 20% and 40% on dry weight. The second one belongs to the isothiazolone family, and it makes up between 15% and 20% on dry weight. The deaerating agent is an ionic deaerant making up between 5% and 10% on dry weight. And the vehicular medium is a limestone filler making up between 36% and 76% on dry weight. Its use is for concrete and/or mortar mass, for a cement slurry type of a surface coating layer or for a cement-based paint, at rates between 0.1 and 0.5%.

## Description

### Object of the invention

As expressed in the present descriptive specification, the invention relates to a biofouling-inhibiting additive in concrete structures and the use thereof that provides novel features that will be described in detail below and which represent a remarkable improvement of the current state of the art in its field of application.

More in particular, the object of the invention focuses on an additive whose main function is to act as a reducer and/or inhibitor of biofouling on surfaces of cement-based building materials. Said additive is a substantial improvement of the antimicrobial agents available to date, since it combines various antimicrobial activities and improves the stability of the active ingredients in cement mixtures, keeping the use of the additive from impairing the final properties of the material and from having toxic effects for human beings or the environment.

### Field of application of the invention

The field of application of the present invention pertains to the sector of chemical industries, encompassing at the same time the realm of construction, being specifically focused on the creation of antimicrobial products applicable as additives in building materials.

### Background of the invention

As is known, concrete presents low susceptibility to being colonised by microorganisms due to its high alkalinity (pH 11-13). However, with time, the values begin decreasing as a result of environmental conditions (washing with rainwater, carbonation, conditions of use). It is at that time that concrete can be colonised by certain microorganisms. In most cases, this colonisation of concrete by microorganisms has negative effects. These effects range from the purely aesthetic and visual to health impairment of human beings and structure degradation resulting from the biological attack, or loss of functionality of the structure.

Despite the large number of disinfectants available on the market, it should be borne in mind that many of the possible disinfectants should be discarded due to their residual activity, so that the number of agents that can be used is quite restricted.

The development and use of antifouling products for concrete structures located in marine environments is a common technique in the world of civil engineering. Muraoka's 1972 studies ("Antifouling Concrete," Muraoka, James S; NAVAL CIVIL ENGINEERING LAB, PORT HUENEME, CALIF, 1972) already pointed to the combination of various biocidal agents to achieve greater efficiency. There are several commercial products that act in this capacity, such as the Zeomighty (Sinanen Zeomic Co. Ltd.), ConBlock MIC (Concrete Sealants Inc.). and ConMicShield (ConShield Technologies Inc.) additives.

All of the additives indicated above are specifically designed to address the problem of *Thiobacillus sp's* attack on waste transport pipelines, with no activity against other microorganisms being described. Likewise, these additives are designed to be admixed in mass to the concrete. This means:
- High economic cost of the final solution, since it requires huge quantities of the product.
- Slight effectiveness of the product, by amount of additive used, since much of the additive is not effective because it is found within the non-exposed inner part of the material.

There are, therefore, several issues that must be overcome with regard to the current state of the art:
- The biocidal agents to be used must be insoluble in water, so as to guarantee the safety of the developed solution, both for humans and for the environment where the structure to be treated is located.
- The above question entails the impossibility of making applications of the biocidal agents in an aqueous base, implying the need to develop new substrates and new forms of application of biofouling-inhibiting agents.
- It is necessary to develop new forms of application of the biocidal additive that will allow to obtain an economically accessible solution, as well as efficient in terms of amount of additive used per exposed surface of the material.
- Lastly, it is necessary to guarantee the durability of the biocide and the coating, which highlights the need to innovate in the biocidal agents to be used, in the formulation of the additive and in the form of application thereof on the building material.

### Disclosure of the invention

The need to obtain new biofouling-inhibiting additives in concrete that can be used either for the creation of new structures or as coatings for pre-existing structures starting from commercial products is justified by the high costs derived from biofouling. One example of this situation is the growth of algae and other biological organisms in water transport channels, which involves head losses in the channel that undermine the hydraulic performance, and can facilitate the appearance of biodeterioration phenomena of the concrete structure. It is also worth mentioning the phenomenon of biodeterioration in sanitation pipes, by the action of bacteria such as *Thiobacillus sp.* Finally, the importance of hygiene in agro-alimentary concrete facilities, which require high levels of asepsis, should also be emphasised.

Therefore, the present invention advocates a novel product that allows to develop a new family of biofouling-inhibiting additives in concrete, reducing the maintenance costs of the affected structures, reducing the costs associated with cleaning and sanitizing processes, ultimately allowing to increase the useful life thereof and their performance.

Accordingly, the proposed product is a multicomponent solution that allows to act on different microbial agents without compromising the final properties of the building material.

More specifically, said multicomponent solution is composed of two antimicrobial priciples, a deaerating agent and a limestone filler.

Each of the components of the proposed solution and the designed formulation are described below.

The first component of the additive is a bactericidal and fungicidal agent that, without excluding other possible ones, belongs to the polychlorophenoxyphenol family. This component acts mainly on the lipid metabolism of microorganisms, notwithstanding the fact that it may have other associated activities. The dosage of this first component would be between 20% and 40% on dry weight.

The second component of the additive is an algaecidal and fungicidal agent that, without excluding other possible ones, belongs to the isothiazolone family. This component acts mainly on the photosynthetic mechanism and the protein synthesis of microorganisms, notwithstanding the fact that it may have other associated activities. The dosage of this second component would be between 15% and 20% on dry weight.

The third component of the additive is a deaerating agent that, without excluding other possible ones, is an ionic deaerant. This component has the fundamental function of minimizing air occlusion in the building material resulting from the addition of the above antimicrobial agents. The dosage of this third component would be between 5% and 10% on dry weight.

The last component of the additive is a limestone filler. This component is used as a vehicular medium of the active ingredients. The dosage of this fourth component would be comprised between 36% and 76% on dry weight.

The additive of the invention can be applied, without prejudice to other possible ways, as a mass additive of the building material (concrete and/or mortar), as an additive for a cement slurry type of a surface coating layer or as an additive for a cement-based paint. In all application cases, the dosage of the additive would be between 0.1 and 0.5% by weight of the dry material.

### Exemplary embodiment and test

Next, laboratory-scale results and field tests carried out are described with an example of a specific embodiment of the advocated additive that demonstrate the efficiency of the product. The laboratory-scale tests consisted in determining the influence of the present invention on the mechanical properties of cementitious materials, the possible leaching of the product, as well as the biofouling inhibition effect.

As for the mechanical tests in the laboratory, they were performed in accordance with UNE-EN 196-1 regulations.

It was observed that, although there is some decrease of the mechanical properties of the material when compared with the master samples, this difference is in no case larger than 15%, allowing to maintain adequate mechanical properties. It is also necessary to remember that the object of the invention has no structural responsibility, although it is necessary to ensure mechanical properties conferring adequate durability of the product.

The influence of the dosage of the additive on the physical properties of the mixtures was likewise verified; it was observed that its addition did not significantly alter the consistency of the mixtures at any of the dosages employed. The densities of the concrete, in turn, both in the hardened state and in the newly poured state, were kept within the same range throughout the series of tests, differences being smaller than 2%.

With regard to leaching of the active ingredient, in the tests carried out according to the prEN 16105: 2010 pre-standard, as a general trend, it was observed that the amount of released product increases as a function of the dose used, although the quantity dissolved is minimal, even at the highest dose, since 1.58 mg/m² would be equivalent to an accumulated leaching smaller than 0.3 ppm, an amount well below the level that can be considered toxic (LD50> 2360 mg/kg). Therefore, it can be stated that the PL-UV-H-2B formulation is sufficiently insoluble.

As for the results corresponding to the assessment of biofouling inhibition properties, the efficiency of the additive against fungi, algae, bacteria and yeasts was evaluated against different types of microorganisms and carried out according to the ISO/CD 16869 regulation.

The first microorganism against which the efficiency of the additive is evaluated is *Escherichia coli,* the additive being observed to exhibit a high biofouling-inhibiting activity level at all evaluated dosages, creating an inhibition halo around all the concrete samples. The formulation also exhibits good performance against *Staphylococcus aureus* at all dosages used (development index of 0), both preventing growth on the surface and creating a halo of developmental inhibition around the sample. Against *Aspergillus niger,* greater dosages of the formulation are required for an inhibition halo (development index of 0) to be present, although the use of the formulation inhibits surface growth at all dosages.

As for the efficiency of the additive as an algae growth inhibiting agent, it can be stated that it has high effectiveness against both evaluated species, since acceptable results are obtained at all the dosages studied, thereby being able to prevent the growth of algae at a superficial level and to create an inhibition halo around the concrete sample, obtaining a growth index of 0.

Field tests were carried out at a port facility. On the descent ramp from the pier to the sea, in the area where the waves break, algae grow profusely, causing serious problems for users and those responsible for the pier. The algae make the concrete ramp become an extremely slippery surface, turning the action of lowering the boat to the sea into a dangerous act.

To alleviate this problem algae are removed by pressurized water at the time of greater development of algae. The cleaning process, together with the development of the algae, causes deterioration of this part of the marina.

The first assay of the field tests consisted in the manufacture of mortar specimens (consisting of a mixture of sand, cement and water) measuring 40×40×160 mm. The mixtures were treated with the product described above, added in the mortar mass during its manufacture.

The assay sought to test the effectiveness of the treatment against algae growth at a time of year when weather conditions were much more conducive to the development of algae. For this, a photographic report of the test specimens was carried out for 8 weeks.

The untreated sample was colonised by algae within one week of placement. And the treated sample clearly delays colonisation by algae by 4 weeks. From this moment, the development of the algae on the treated sample increases until reaching the entire surface of the specimen at week 8.

It is to be noted that the untreated sample was totally colonised by algae only two weeks after its placement in the port.

The conclusion drawn after the first field test is that the product whose invention is claimed has a clear inhibitory effect on the growth of algae on concrete. After a period of time, the surface is covered by a layer of biofilm formed by microbiological cells, active and non-active, and metabolites of microorganisms, this layer being a support that allows algae to settle and develop.

Therefore, in order to keep a surface's full protection against algae growth for an extended period of time, the formation of the biofilm layer should be avoided via a preventive cleaning process.

In the event that the concrete is treated with the product described in the present invention, the cleaning process may be much less frequent and less aggressive, remarkably reducing the maintenance of the structure and the degradation by this process.

It is noteworthy that the specimens did not lose the effectiveness of biofouling inhibition. At the end of the test, the specimens were removed and subjected to a microbiological test to evaluate the durability of the biostatic effect of the product after field testing.

Cultures with the species of algae *Stichococcus bacillaris* and *Scenedesmus vacuolatus* were observed on parts of the test specimens. The treated sample had a high activity of inhibition of the growth of the evaluated algae, developing a halo of inhibition around the sample, even after remaining two months under real conditions of use.

The second assay of the field tests sought to study the effectiveness of different forms of application of the product. This way, two specimens were again placed in the aforementioned facilities, considering two types of treatments: a cementitious slurry surface coating layer and a cement-based paint, both with addition of the product described in the present invention.

It was observed that the bulk treatment prevented the growth of algae on the surface of the specimens for more than 18 months.

The nature of the present invention, as well as the manner of practising it, having been sufficiently described, it is not deemed necessary to extend its explanation for any person skilled in the art to understand its scope and the advantages deriving therefrom; it is noted that, in its essence, it may be put into practice in other embodiments differing in detail from that indicated by way of example, the protection being sought reaching them in the same way, provided their fundamental principle is not altered, changed or modified.

## Claims

1. Biofouling-inhibiting additive in concrete structures, **characterized in that** consists in a multicomponent solution which comprises two components with antimicrobial active principles, a deaerating agent and a vehicular medium.

2. Biofouling-inhibiting additive according to claim 1 **characterised in that** a first antimicrobial component of the solution is a bactericidal and fungicidal agent, and a second antimicrobial component is an algaecidal and fungicidal agent.

3. Biofouling-inhibiting additive according to claim 2 **characterised in that** the first bactericidal and fungicidal component belongs to the polychlorophenoxyphenol family.

4. Biofouling-inhibiting additive according to claim 3 **characterised in that** the first bactericidal and fungicidal component of the polychlorophenoxyphenol family in the solution is in a proportion between 20% and 40% on dry weight.

5. Biofouling-inhibiting additive according to claim 2 **characterised in that** the second algaecidal and fungicidal component belongs to the isothiazolone family.

6. Biofouling-inhibiting additive according to claim 5 **characterised in that** the second algaecidal and fungicidal component of the isothiazolone family in the solution is in a proportion between 15% and 20% on dry weight.

7. Biofouling-inhibiting additive according to any of the claims 1-6 **characterised in that** the deaerating agent is an ionic deaerant.

8. Biofouling-inhibiting additive according to claim 7 **characterised in that** the ionic deaerating agent in the solution is in a proportion between 5% and 10% on dry weight.

9. Biofouling-inhibiting additive according to any one of the preceding claims 1-8 **characterised in that** the vehicular medium of the additive is limestone filler.

10. Biofouling-inhibiting additive according to claim 9 **characterised in that** the limestone filler in the solution is in a proportion between 36% and 76% on dry weight.

11. Biofouling-inhibiting additive according to any one of the preceding claims 1-10 **characterised in that** is applicable as additive admixed in mass to the concrete and/or mortar constructive material, as additive for a surface coating layer of cement slurry type or as additive for a cement based paint.

12. Biofouling-inhibiting additive according to an claim 11 **characterised in that** the application rate is comprised between 0.1 % and 0.5% by weight of the dry material.
